# EUROPEAN PATENT APPLICATION

(11) **EP 3 878 744 A1**
(43) Date of publication of application: **15.09.2021**
(21) Application number: 21161584.4
(22) Date of filing: 09.03.2021
(51) Int. Cl.: B64D 11/04, B64D 11/00, B64D 13/06

(54) **REPLACEABLE THERMAL HEATING OR COOLING DEVICE FOR AIRCRAFT MEAL BOXES AND COMPARTMENTS**

(30) Priority: 09.03.2020 US 202016812837
(71) Applicant: B/E Aerospace, Inc., Winston-Salem, NC 27105 (US)
(72) Inventor: BURD, Peter J.L., Burry Port, South Wales SA 16 0RB (GB)
(74) Representative: Dehns

(57) **Abstract**

A modular replaceable heating or cooling (RTHC) device is disclosed. In embodiments, the RTHC device includes a housing enclosing a forward control section (104) attachable to a rear thermal section (106). The housing is slotted for removable installation into rails in the interior walls of a galley food compartment. The thermal section includes gel packs (202) of a heatable/chillable temperature storage medium (e.g., polymer gel) enclosed in a membrane for controlled dissipation and air channels (204) to admit circulating air over or through the gel packs to be chilled or heated by the temperature storage medium. The control section includes scroll fans (206) for drawing air into the RTHC device through air intakes for chilling/heating, exhaust vents for returning the chilled/heated air to the compartment, control switches for the scroll fans, and visual/auditory status indicators, e.g., for fan speed, battery charge, or the interior temperature of the compartment.

## Description

### BACKGROUND

Galley structures and monuments aboard passenger aircraft have a maximum storage capacity for perishable foodstuffs, which capacity may be limited by the ability of the onboard galley chilling system to maintain perishable contents at or below the required maximum temperature over the average flight time of the aircraft. Smaller or shorter-haul commercial aircraft, rotorcraft, or business jets may not have sufficient chiller capacity for longer flight times, or may not have onboard chiller systems at all.

### SUMMARY

A modular replaceable heating or cooling (RTHC) device is disclosed. In embodiments, the RTHC device includes a housing enclosing a forward control section attachable to a rear thermal section. The housing is slotted for removable installation into rails in the interior walls of a galley food compartment. The thermal section includes gel packs of a heatable/chillable temperature storage medium (e.g., polymer gel) enclosed in a membrane for controlled dissipation and air channels to admit circulating air over or through the gel packs to be chilled or heated by the temperature storage medium. The control section includes scroll fans for drawing air into the RTHC device through air intakes for chilling/heating, exhaust vents for returning the chilled/heated air to the compartment, control switches for the scroll fans, and visual/auditory status indicators, e.g., for fan speed, battery charge, or the interior temperature of the compartment.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is an underside view of a replaceable thermal heating or cooling (RTHC) device according to example embodiments of this disclosure;
FIG. 2 is an overhead partial cutaway view of the RTHC device of FIG. 1;
FIG. 3 is an illustration of operations of the RTHC device of FIG. 1;
FIG. 4 is a diagrammatic illustration of components of the RTHC device of FIG. 1;
FIG. 5 is an isometric view of a storage and transport apparatus for the RTHC device of FIG. 1;
FIG. 6 is an overhead partial cutaway view of the RTHC device of FIG. 1 in an extended configuration;
and FIG. 7 is an isometric view of a galley cart incorporating the RTHC device of FIG. 1.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

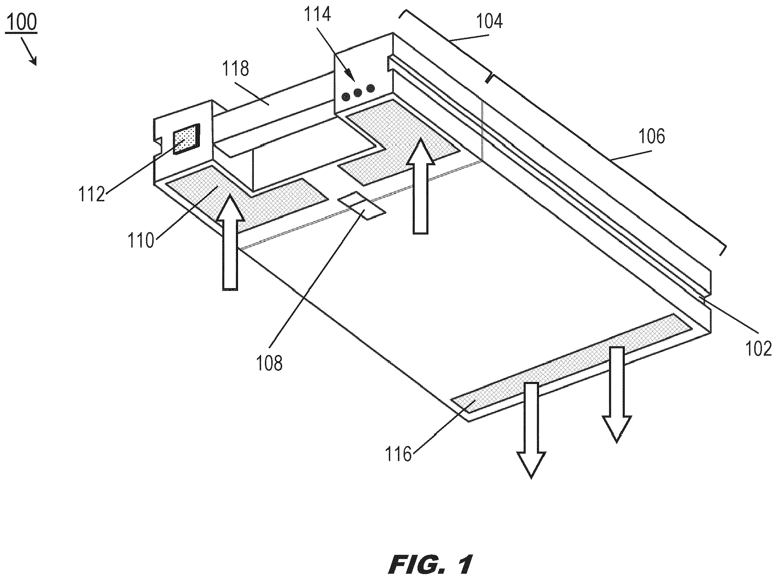

Referring to FIG. 1, a replaceable thermal heating/cooling (RTHC) device 100 is disclosed. The RTHC device 100 may include guide slots 102, control section 104, thermal section 106, quick-disconnect catch 108, air intakes 110, control switch 112, visual indicators 114, exhaust vent 116, and transport handle 118.

In embodiments, the RTHC device 100 may be temporarily installed, via the guide slots 102, into the upper portion of a galley food compartment (e.g., meal box, Standard Unit (SU)) to maintain its contents at or near a desired temperature. For example, the RTHC device 100 may be heated or chilled prior to use. The forward control section 104 of the RTHC device 100 may include battery-powered scroll fans capable of drawing ambient air within the compartment through air intakes 110 into and through the exterior housing of the RTHC device, where the air is heated or chilled via contact with a temperature storage medium disposed within the rear thermal section 106 and recirculated back into the surrounding environment (e.g., the interior of the food compartment) via the rear exhaust vent 116.

In embodiments, the heated or chilled RTHC device 100 may be used as a heating or cooling aid within a cooler or other like insulated compartment to maintain its contents at a desired low or high temperature. For use while installed in a galley food compartment, the scroll fans may be activated and deactivated by the control switch 112 forward mounted on the control section 104 to facilitate the chilling or heating process. In some embodiments, the scroll fans may have more than one operating speed (e.g., low speed, high speed) through which the user may cycle via the control switch 112 depending upon the desired temperature or degree of chilling (e.g., a higher fan speed may result in more rapid chilling or a lower interior temperature).

In embodiments, the control section 104 and thermal section 106 may be mutually attachable and detachable modules. For example, the smaller control section 104 may be attachable to the larger thermal section 106 via locking quick-disconnect catches 108 connecting the exterior housings of the control and thermal sections. In embodiments, in addition to the scroll fans and control switch 112, the control section 104 may house rechargeable batteries capable of powering the scroll fans. For example, the control section 104 and thermal section 106 may be detached from each other via the quick-disconnect catches 108, such that the thermal section may be heated or chilled for subsequent use. Similarly, the detached control section 104 may be plugged into a charging unit (not shown) to recharge the batteries housed therein. In embodiments, the control section 104 may include one or more visual indicators 114 in its forward housing, such that the visual indicators are visible to a user facing a food compartment wherein the RTHC device 100 is installed. For example, the visual indicators 114 may include light-emitting diodes (LED) or like alert lights capable of providing visual alerts, e.g., whether or not the scroll fans are currently active, if the battery's charge has become low and should be recharged, or if the ambient temperature is sufficiently low (e.g., under a required maximum temperature).

In embodiments, the control section 104 may include a transport handle 122 via which the RTHC device 100 (or the control section thereof) may be carried or transported.

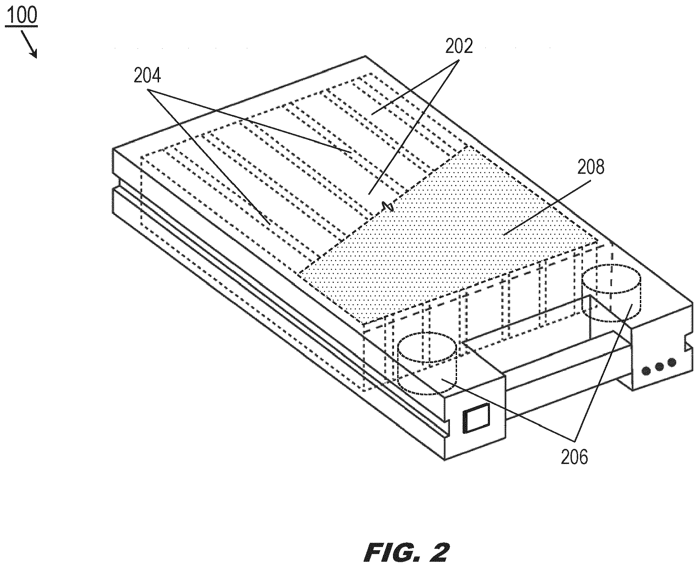

Referring to FIG. 2, the RTHC device 100 is shown. The RTHC device 100 may include synthetic polymer gel (SPG) packs 202, air channels 204, and scroll fans 206.

In embodiments, the RTHC device 100 may include a temperature storing medium within the thermal section 106. For example, disposed within the housing of the thermal section 106 may be one or more synthetic polymer gel (SPG) packs 202 or any like pliable temperature storing material approved for food contact. When the RTHC device 100 (or the thermal section 106 thereof) is chilled or heated (e.g., via a freezer or microwave oven), the SPG packs 202 may similarly be chilled or heated and retain their chilled or heated state for an extended length of time that provides for gradual dissipation of the heat or cold over the extended length of time. In some embodiments, the thermal section 106 may be chilled or heated at a specified temperature for shorter or longer predetermined periods of time, e.g., in order to ensure that the contents of an insulated food compartment of standard volume may be maintained at or below a particular threshold temperature for at least a given time period (e.g., at or below 40 F/∼4.4 C per U.S. Federal Aviation Administration (FAA) regulations throughout a minimum three-hour flight window). Each SPG pack 202 may be encapsulated within a protective perforated membrane providing for controlled gradual dissipation of heat or cold. For example, the membrane may be fashioned from silicon-based materials, polyimide films or other such protective materials suitable for food service use.

In embodiments, the thermal section 106 may include air channels 204 (e.g., conduits, tubes) above, below, or between the SPG packs 202. For example, the air channels 204 allow air from the interior of the food compartment and drawn into the RTHC device 100 by the scroll fans 206 to pass over, under, and/or through the SPG packs between entering the RTHC device 100 via the air intakes (110, FIG. 1) and exiting via the exhaust vent (116, FIG. 1); in doing so, the air may be gradually heated or chilled before recirculating back into the food compartment. In some embodiments, the thermal section 106 or individual SPG packs 202 may be partially insulated for longer preservation of the internal temperature of the SPG packs. For example, the thermal section 106 or individual SPG packs 202 may be partially lined with thin sections of vacuum insulated panels 208 (VIP) or other like insulating material of minimal thickness and weight and having a high R-value while partially exposing the temperature storing material to allow for heating or chilling.

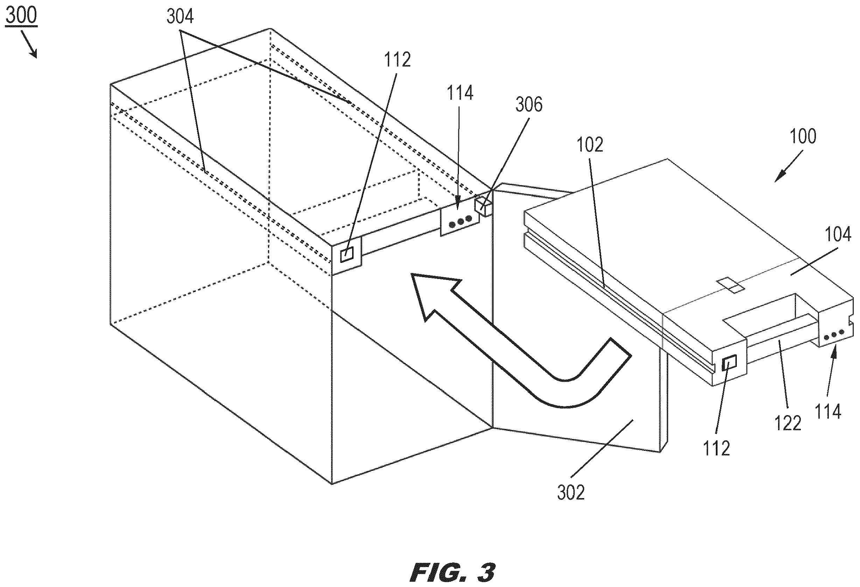

Referring to FIG. 3, a galley food compartment 300 (e.g., meal box, Standard Unit (SU)) is disclosed.

In embodiments, the RTHC device 100 may preferably be installed within an upper interior portion of the galley food compartment 300, e.g., proximate to its ceiling or upper interior surface. For example, the control switch 112 and visual indicators 114 may be oriented on the control section 104 to be visible and/or articulable by a user facing the interior of the galley food compartment 300, or accessing the compartment via a forward door 302.

In embodiments, the galley food compartment 300 may incorporate rails or guides 304 mounted to the left and right interior surfaces. For example, the guide slots 102 of the RTHC device 100 may slidably engage with the guides 304, facilitating the installation and removal of the RTHC device of or from the galley food compartment 300. In some embodiments, the galley food compartment 300 may include a release 306 capable of partially releasing the RTHC device 100 from a secure orientation within the galley food compartment, from which released state the RTHC device may be fully removed (e.g., via the handle 122).

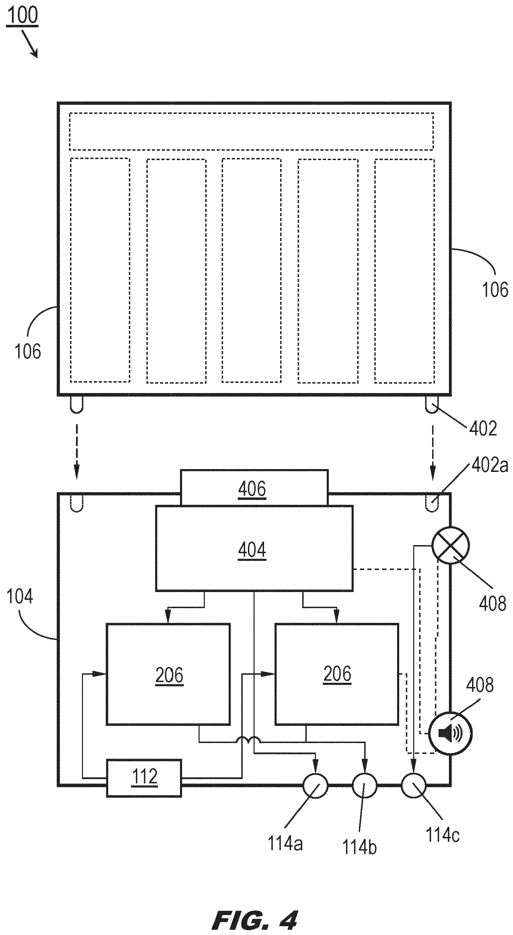

Referring to FIG. 4, the RTHC device 100 is shown. The RTHC device 100 may include locating pins 402, rechargeable batteries 404, battery charging port 406, and temperature sensors 408.

In embodiments, the rechargeable batteries 404 may power the scroll fans 206 upon activation via the control switch 112. The control section 104 may include a charging port 406 into which the detached control section may be plugged or otherwise inserted to recharge the batteries 404. In some embodiments, the batteries 404 may be configured for inductive recharging, e.g. via depositing the control section 104 on an inductive charging surface.

In embodiments, the locating pins 402 may assist the quick-disconnect catches (108, FIG. 1) in attaching the control section 104 to the thermal section 106. For example, the locating pins 402 (e.g., retractable or non-retractable) in the thermal section 106 may engage with recesses (402a) within the control section 104 to quickly orient the two sections together.

In embodiments, the visual indicators (114, FIG. 1) may monitor and report on the status of components of the RTHC device 100. For example, the visual indicator 114a may provide visual alerts associated with the current status of the batteries 404 (e.g., illuminating or flashing if the charge held by the batteries drops below a recharge threshold). Similarly, the visual indicator 114b may provide visual alerts associated with the current status of the scroll fans 206 (e.g., illuminated when active, flashing or more brightly illuminated when at high speed).

In embodiments, the RTHC device 100 may include temperature sensors 408 for determining a current temperature, e.g., an interior air temperature of a galley food compartment (300, FIG. 3) within which the RTHC device has been installed for chilling or heating operations. For example, if the sensed air temperature drops below a threshold temperature (e.g., at, or related to, a required maximum temperature), the visual indicator 114c may provide a visual alert. In some embodiments, the RTHC device 100 may include an audible indicator 410 such that alerts may be provided visually, aurally, or via some combination of visual and aural warnings (e.g., visual indicators 114a for battery status, audible indicator 410 for temperature threshold warnings). For example, the audible indicator 410 may indicate a threshold alert if the sensed temperature exceeds a user defined threshold, e.g., 4°C.

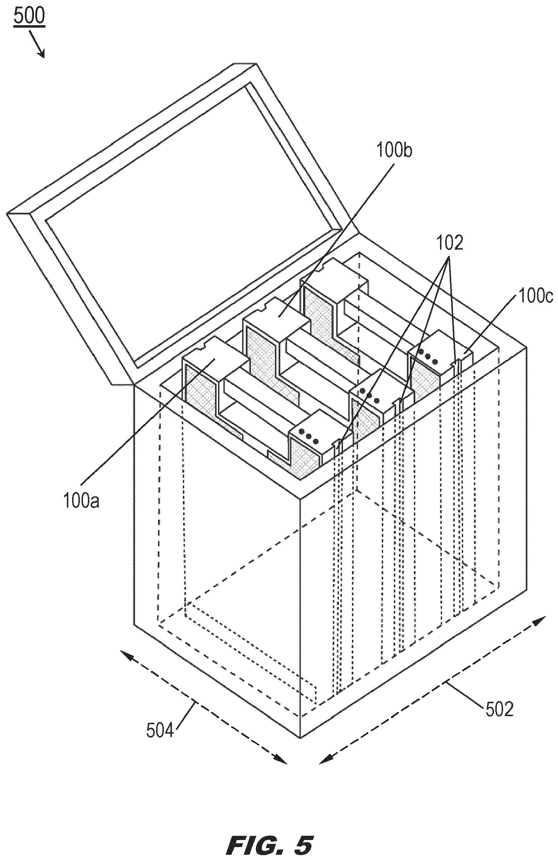

Referring to FIG. 5, a transport case 500 and RTHC devices 100a-c are shown.

In embodiments, the RTHC devices 100a-c may be implemented and may function similarly to the RTHC device 100 of FIGS. 1-4, except that the transport case 500 may provide insulated inflight storage for additional RTHC devices 100a-c, e.g., to extend the chilling capacity of the galley food compartment (300, FIG. 3). For example, the RTHC devices 100a-c may be pre-heated or pre-chilled and placed in the transport case 500 in their pre-heated or pre-chilled state. Should the RTHC device 100 fully discharge its chilling or heating capacity (e.g., via depletion of its batteries (404, FIG. 4) or of the heating/chilling capacity of its SPG packs (202, FIG. 2)) the RTHC device 100 may be replaced within the galley food compartment by one of the stored RTHC devices 100a-c for extended heating or chilling capacity.

In some embodiments, the transport case 500 may vary in configuration. For example, while the transport case 500 may have a length 502 and a width 504 characteristic of one arrangement of the RTHC devices 100a-c (e.g., stacked top to bottom), different transport cases having variable lengths and widths may be manufactured and implemented. For example, the RTHC devices 100a-c may be arranged side-by-side, e.g., such that the guide slots 102 of each RTHC device lie adjacent to each other, resulting in a transport case 500 of increased length 502 but decreased width 504.

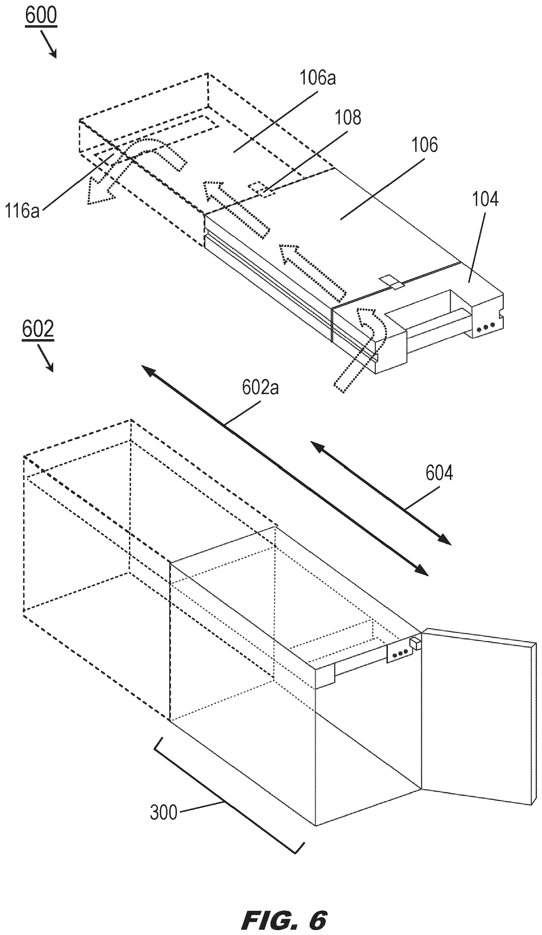

Referring to FIG. 6, an extended-size RTHC device 600 is shown.

The extended-size RTHC device 600 may be implemented and may function similarly to the RTHC devices 100, 100a-c of FIGS. 1 through 5, except that the extended-size RTHC device 600 may be proportioned for a double-depth meal box 602 or double-depth galley food compartment. For example, while the RTHC devices 100, 100a-c may be proportioned for optimal fit into a standard-size galley food compartment (300, FIG. 3), the double-depth meal box 602 may have a depth (602a) substantially twice the depth (604) of the standard-size galley food compartment 300.

In embodiments, the extended-size RTHC device 600 may be fashioned by attaching an additional thermal section 106a at the rear end of the thermal section 106 (e.g., via additional quick-disconnect catches 108a), which thermal section 106 may similarly be attached to the control section 104. For example, air from within the double-depth meal box 602 may be drawn by the scroll fans (206, FIG. 4) into the control section 104, into the thermal section 106, and then into the additional thermal section 106a (e.g., via the air channels (204, FIG. 2)) within the thermal sections) before exiting the additional thermal section 106a in a chilled or heated state via its exhaust vent 116a. In some embodiments, the extended-size RTHC device 600 may comprise a control section 104 attached to a single thermal section of extended depth.

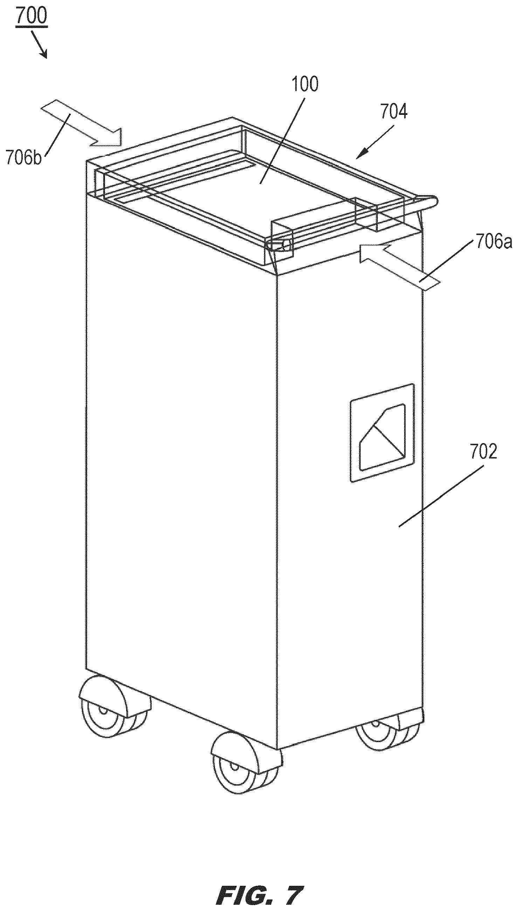

Referring to FIG. 7, a galley cart 700 is shown. The galley cart may include a forward door 702 and dry ice tray 704.

In embodiments, the RTHC device 100 may be insertable into the dry ice tray 704 to regulate the temperature of food products or refreshments stored within its internal compartments (e.g., accessible via the forward door 702) without the need for chilling system installation (e.g., in cart bays). For example, the RTHC device 100 may be insertable from the front (706a) or rear (706b) of a full-size galley cart as desired, or insertable from either the front or rear of a half-size galley cart, and replaceable inflight by cabin crew as needed, e.g., once the heating or cooling capacity of the RTHC device is depleted.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, substitutions may be made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A replaceable thermal heating or cooling, RTHC, device, comprising:
a housing including a control section (104) and a thermal section (106) attachable to the control section, one or more lateral slots (102) set into each of a left side and a right side of the housing, the lateral slots configured to slidably engage with lateral guides set into left and right interior sidewalls of an aircraft food storage compartment to secure the RTHC device therein,
the thermal section comprising:
one or more air channels (204) configured to accept a circulating air stream forced therethrough;
and
at least one thermal pack (202) including a pliable temperature storage medium encapsulated within a perforated membrane, the temperature storage medium configured for controlled heating or chilling the circulating
air stream by contact therewith;
and
the control section comprising:
at least one air intake (110) in communication with the one or more air channels, the air intake configured to admit the circulating air stream;
one or more scroll fans (206) configured to drive the circulating air stream through the air intake;
at least one rechargeable battery (404) operatively coupled to the one or more scroll fans;
and
one or more indicators (114, 410) operatively coupled to at least one of the scroll fans and the battery, the indicators configured to display one or more alerts.

2. The RTHC device of claim 1, wherein the thermal section is attachable to the control section via one or more of a locking catch (108) and a locating pin (402).

3. The RTHC device of claim 1 or 2, wherein the thermal section is capable of being heated to a desired temperature.

4. The RTHC device of claim 1, 2 or 3, wherein the thermal section is capable of being chilled to a desired temperature.

5. The RTHC device of any preceding claim, wherein one or more of the thermal section and the at least one thermal pack is partially lined with insulating material.

6. The RTHC device of any preceding claim, wherein the one or more indicators are oriented toward an access door (702) of the food storage compartment.

7. The RTHC device of any preceding claim, wherein the at least one rechargeable battery includes at least one external connection port (406) configured to accept a charge.

8. The RTHC device of any preceding claim, wherein the one or more alerts are associated with at least one of:
a charge status of the at least one battery;
and
an active status of the one or more scroll fans.

9. The RTHC device of any preceding claim, wherein the one or more indicators include at least one of:
a visual indicator (1149) configured to display a visual alert;
and
an aural indicator (410) configured to generate an audible alert.

10. The RTHC device of any preceding claim, wherein the control section further comprises:
at least one control switch (112) configured to activate and deactivate the one or more scroll fans.

11. The RTHC device of any preceding claim, wherein the control section further comprises:
at least one sensor (408) configured to sense a temperature;

12. The RTHC device of claim 0, wherein the one or more alerts are associated with the sensed temperature.

13. The RTHC device of any preceding claim, wherein the control section includes a handle, the RTHC device capable of being carried via the handle.

14. The RTHC device of any preceding claim, wherein the thermal section is a first thermal section, further comprising:
at least one second control section attached to the first thermal section at a first end,
the control section attached to the first thermal section at a second end opposite the first end.

15. The RTHC device of any preceding claim, further comprising:
a galley cart (700) transportable via one or more casters attached to the underside, the galley cart including:
one or more internal compartments configured to store food products and
refreshments;
and
at least one cooling tray (704) disposed within the internal compartments,
the cooling tray configured to store a quantity of dry ice;
the RTHC device (100) configured for stowage within the cooling tray.
